# EUROPÄISCHE PATENTSCHRIFT

(11) **EP 2 085 171 B1**
(45) Veröffentlichungstag und Bekanntmachung des Hinweises auf die Patenterteilung: **22.12.2010**
(21) Anmeldenummer: 08169563.7
(22) Anmeldetag: 20.11.2008
(51) Int. Cl.: B23K 9/167, B23K 9/24

(54) **Verfahren zur Durchführung eines Lichtbogenfügeprozesses mit einer sich nicht verbrauchenden Elektrode**
Method of arc welding with non-consumable electrode
Procédé de soudage à l'arc avec une électrode non fusible

(30) Priorität: 29.01.2008 DE 102008000170
(43) Veröffentlichungstag der Anmeldung: 05.08.2009
(73) Patentinhaber: EWM Hightec Welding GmbH, 56271 Mündersbach (DE)
(72) Erfinder: Knopp, Norbert, 56337 Eitelborn (DE); Hübner, Marc, 56244 Steinen (DE)

(56) Entgegenhaltungen:
- CH-A5- 676 815
- FR-A- 2 213 832
- US-A- 4 631 027
- ITO ET AL: "Self-Sharpening of Thin Tungsten Electrode in Single, High-Current Discharge: Its Dynamics and Mechanism" CIRP ANNALS, TECHNISCHE RUNDSCHAU, BERNE, CH, Bd. 56, Nr. 1, 1. Januar 2007 (2007-01-01), Seiten 229-232, XP022119554 ISSN: 0007-8506

## Beschreibung

Die Erfindung betrifft ein Verfahren zur Durchführung eines Lichtbogenfügeprozesses mit einer sich nicht verbrauchenden Elektrode, insbesondere zur Durchführung eines Lichtbogenschweißprozesses mit einer Wolframelektrode, bei dem nach dem eigentlichen Schweißprozess, durch Veränderung der Schweißprozessparameter auf ein lichtbogenseitiges Ende der Wolframelektrode formgebend eingewirkt wird.

Schweißverfahren können für das Verbinden von metallischen und nichtmetallischen Werkstoffen angewendet werden. Zu den häufig angewendeten Schweißverfahren für das Verbinden von metallischen Werkstoffen zählen die Lichtbogenschweißverfahren, bei dem die benötigte Wärme mittels eines Lichtbogens eingebracht wird, der zwischen einer Elektrode und einem Werkstück gezündet wird. Grundsätzlich kann zwischen den Verfahren mit einer abschmelzenden Elektrode, die der Gruppe der Metall-Schutzgas-Schweißverfahren (MSG) zuzuordnen ist und den Schweißverfahren mit einer nichtabschmelzenden bzw. sich nicht verbrauchenden Elektrode, wie das Wolfram-Inertgasschweißen (WIG), unterschieden werden. Beim so genannten MSG-Schweißverfahren wird eine drahtförmige Elektrode mit Hilfe einer Vorschubvorrichtung in Richtung des Schmelzbades dem Schweißprozess als Zusatzmaterial zugeführt, wobei der Lichtbogen zwischen dem werkstückseitigen Elektrodenende und dem Werkstück gezündet wird. Der Schweißprozess läuft dabei unter einer schützenden Atmosphäre ab, indem aus einem Schweißbrenner Schutzgas ausströmt. Als Schutzgas kann hierbei Inertgas oder Aktivgas eingesetzt werden. Beim WIG-Schweißverfahren hingegen wird ausschließlich ein Inertgas verwendet. Das Zusatzmaterial kann analog zum MSG-Schweißverfahren drahtförmig sein, welches maschinell in Richtung des Werkstücks gefördert oder manuell zugeführt wird. Charakteristisch für das WIG-Schweißen ist dabei, dass die Elektrode während eines Schweißprozesses nicht oder nur unwesentlich verbraucht wird.

Die Wolfram Elektrode wird in einem Träger im Schweißbrenner gehalten, wobei Schutzgas aus einer Düse ausströmt und die Elektrode konzentrisch umgibt, so dass während eines Schweißprozesses die Wolframelektrode und das Schmelzbad vor dem Zutritt atmosphärische Gase wie Sauerstoff, Wasserstoff und Stickstoff geschützt ist. Die für einen derartigen Schweißprozess benötigte Energie wird in bekannter Weise durch eine externe Energiequelle, einer Schweißstromquelle zur Verfügung gestellt.

Üblicherweise kommen digital gesteuerte Schweißstromquellen zum Einsatz, welche Reproduzierbarkeit und eine hohe Flexibilität bei der Durchführung von Schweißprozessen ermöglichen. Digitale Schweißstromquellen bestehen im wesentlichen aus steuerbaren Energiewandlern, Messeinrichtungen für Strom, Spannung und für andere prozessbeeinflussende Größen, einer Steuerung mit reduzierten analogen und überwiegend digitalen Schaltungen sowie echtzeitfähiger Software mit Schweiß- und Nutzerdaten. Derartige Schweißstromquellen ermöglichen eine Vielzahl von Möglichkeiten bei der Anpassung der Prozessparameter an die jeweilige Schweißaufgabe. Beispielsweise ist es somit möglich, einen Schweißvorgang durchzuführen, bei dem vor dem eigentlichen Schweißprozess die Prozessparameter für eine voreinstellbare Zeitdauer derart angepasst werden, dass einerseits das Zündverhalten bei Schweißbeginn und andererseits die Standzeit der Wolframelektrode verbessert wird.

Die beim WIG-Schweißen eingesetzte Wolframelektrode schmilzt aufgrund ihrer Temperaturbeständigkeit während des Schweißvorgangs nicht ab. Der gegebenenfalls erforderliche Zusatzwerkstoff wird von Hand oder aber wie beim MSG-Schweißen mittels einer Drahtvorschubvorrichtung maschinell zugeführt. Die führ den eigentlichen Schweißprozess notwendige Wärmeeinbringung erfolgt durch einen Lichtbogen, welcher zwischen der Wolframelektrode und dem Werkstück gezündet wird. Für das Zünden des Lichtbogens sind eine Vielzahl von Verfahren bekannt, wobei zwischen einem berührungslosen Zündverfahren und einem Verfahren, bei dem vor dem Zünden die Wolframelektrodenspitze die Werkstückoberfläche berührt, unterschieden werden kann. Diese Zündverfahren sind dem Fachmann hinreichend bekannt, so dass an dieser Stelle darauf nicht näher eingegangen werden muss. Voraussetzung für einen fehlerfreien Zündprozess, unabhängig vom angewendeten Zündverfahren, ist unter anderem die richtige Wahl der Wolframelektrode und deren Vorbehandlung. Insbesondere die Form des Wolframelektrodenendes hat maßgeblichen Einfluss auf das Zündverhalten und das Schweißergebnis.

Die dabei zum Einsatz kommende Wolframelektrode besteht meist nicht aus reinem Wolfram, sondern ist mit Legierungselementen wie Thorium, Zirkonium und Tantal versetzt. Der Anteil der Legierungselemente liegt dabei in der Regel zwischen 1% und 5%. Die Legierung bewirkt eine höhere Standzeit der Elektrode und verbessert gleichzeitig die Zündeigenschaften. Wesentlich für die Zünd- und Schweißeigenschaften der Elektrode ist auch ihr Durchmesser und die Form des lichtbogenseitigen Elektrodenendes. Üblicherweise wird das Wolframelektrodenende in einem Spitzenwinkel von 30° - 60° angeschliffen. Dabei sollte auf eine geringe Rauhtiefe und Zentrizität der Elektrodenspitze geachtet werden.

Mit einem derart vorbereiteten Wolframelektrodenende lassen sich Schweißverbindungen mit hoher Qualität herstellen, wobei auch das Zünden des Lichtbogens verbessert wird. Mit jedem durchgeführten Schweißvorgang nutzt sich die Wolframelektrode jedoch ab, so dass sich die Lichtbogeneigenschaften und das Zündverhalten immer mehr verschlechtern und ein erneutes Anschleifen der Elektrode notwendig wird. In der Praxis bedeutet dies jedoch vor allem längere Fertigungszeiten und höhere Kosten. Wünschenswert wäre daher ein Verfahren mit dem die Standzeit der Elektrode verlängert werden kann ohne dabei Qualitätsverluste hinnehmen zu müssen. Zudem sollte das Zünden des Lichtbogens zu Beginn eines Schweißprozesses fehlerfrei erfolgen können.

Die CH-A-676 815 offenbart eine Formgebung der Elektrode durch ein Schleifverfahren. In der US-A-4631027 wird die Elektrode thermisch behandelt.

Weiterhin kann es dazu kommen, dass beim Zündprozess, infolge der Erwärmung des Wolframelektrodenendes, Material vom Elektrodenende abtropft und in das Schmelzbad gelangt. Das hat zur Folge, dass das Elektrodenmaterial in der Schweißnaht in einem aufwendigen Verfahren, beispielsweise durch Herausschleifen der Verunreinigung mit anschließender Röntgenkontrolle, wieder entfernt werden muss. Eine derartige Nachbearbeitung erhöht die Fertigungszeiten und Kosten erheblich.

Der Erfindung liegt daher die Aufgabe zu Grunde, ein Verfahren anzugeben, mit dem die Schweiß- und Zündprozesse bei gleichzeitiger Erhöhung der Standzeit der Wolframelektrode beim WIG-Schweißverfahren verbessert werden können. Weiterhin soll ein Abtropfen von Elektrodenmaterial verhindert werden, um Wolframeinschlüsse in der Schweißnaht zu vermeiden.

Diese Aufgabe wird erfindungsgemäß gelöst, indem das Wolframelektrodenende, durch eine Parameteränderung am Ende eines Schweißprozesses, einen schmelzflüssigen Zustand erreicht und eine kugelkalottenförmige Ausbildung erzielt wird.

Die Erfindung geht dabei von der Überlegung aus, dass gerade für das Zünden eines Lichtbogens, die Zentrizität und Form des Wolframelektrodenendes eine wesentliche Rolle bei der Herstellung einer qualitativ hochwertigen Schweiß- oder Lötnaht spielt. Vor allem eine von einer axialsymmetrischen Form abweichende Form des Wolframelektrodenendes, insbesondere vom Elektrodenende abstehendes Material, sollte für einen fehlerfreien Zünd- und Schweißvorgang vermieden werden.

Dies wird dadurch erreicht, dass im Anschluss an den eigentlichen Schweißprozess, durch eine Veränderung der Prozessparameter das Wolframelektrodenende einen schmelzflüssigen Zustand erreicht und eine kugelkalottenförmige Ausbildung des Wolframelektrodenendes erzielt wird.

Insbesondere bei Schweißprozessen mit einem hohen Energieeintrag, kommt es zu einer hohen thermischen Belastung der Wolframelektrode, bei dem das Wolframelektrodenende angeschmolzen wird und dadurch eine prozessabhängige charakteristische Form annimmt. Nach einem abgeschlossenen Schweißvorgang entspricht das Ende der Wolframelektrode daher meist nicht einer gewünschten kugelkalottenartigen Form, bei der ein problemloses Wiederzünden erfolgen kann.

Bevorzugt erfolgt das durch die Prozessparameteränderung bewirkte Anschmelzen des Wolframelektrodenendes nach einer Elektrodenabkühlphase. Die Abkühlung der Wolframelektrode kann dadurch erreicht werden, indem die Prozessparameter so eingestellt werden, dass gegenüber dem eigentlichen Schweißprozess weniger Energie in den Prozess eingebracht wird.

Besonders bevorzugt erfolgt die Elektrodenabkühlphase derart, dass das Wolframelektrodenende soweit abgekühlt wird, dass mit Abschluss der Elektrodenabkühlphase das Wolframelektrodenende keinen schmelzflüssigen Zustand aufweist.

Vor allem beim AC-WIG-Schweißprozess, also beim Schweißen mit einem Wechselstrom, ist die thermische Belastung des lichtbogenseitigen Wolframelektrodenendes besonders hoch, da die Wolframelektrode während des Schweißprozesses zum Zeitpunkt einer positiven Halbwelle, zumindest zeitweise ein gegenüber dem Werkstück positives Potenzial aufweist. Dabei wird die positiv gepolte Wolframelektrode mit einem aus dem negativ gepolten Werkstück emittierenden Elektronenstrom beaufschlagt und dadurch zusätzlich so stark erhitzt, dass das Wolframelektrodenende während dieser Phase einen schmelzflüssigen Zustand erreichen kann. In Folge eines solchen Anschmelzvorgangs kann es vorkommen, dass das Elektrodenende, während oder nach dem Schweißprozess, eine von einer angestrebten kugelkalottenförmigen Ausbildung abweichende Form aufweist, durch beispielsweise vom Elektrodenende abstehendes Elektrodenmaterial.

Eine kugelkalottenförmige Ausbildung des Wolframelektrodenendes kann erreicht werden, indem im Anschluss an den eigentlichen Schweißprozess, durch eine Veränderung der Schweißprozessparameter, das Wolframelektrodenende zumindest kurzzeitig aufgeschmolzen wird. Dadurch wird erreicht, dass das eventuell vom Elektrodenende abstehende Elektrodenmaterial mit aufgeschmolzen wird und sich das lichbogenseitige Ende der Elektrode halbkugelförmig ausbildet.

Für das Anschmelzen des Wolframelektrodenendes, werden die Prozessparameter für eine voreinstellbare Zeitdauer vorzugsweise so eingestellt, dass eine kalottenförmige Ausbildung des Wolframelektrodenendes erzielt wird. Beispielsweise kann das Anschmelzen des Elektrodenendes, durch einen den Schweißvorgang abschließenden Endpuls erfolgen und somit dem Schweißprozess die dafür notwendige Energiemenge zugeführt werden.

Dabei kann die Wolframelektrode für einen besonders effektiven Anschmelzvorgang gegenüber dem Werkstück positiv gepolt werden, da somit die Temperaturerhöhung des Elektrodenendes bei gleichem Energieeintrag stärker ist als bei einer negativ gepolten Elektrode. Der für eine Temperaturerhöhung notwendige Energieeintrag zur Erreichung der kugelkalottenförmigen Ausbildung des Elektrodenendes kann mittels einer ausreichend langen Pulsdauer, einer ausreichenden Pulshöhe oder eine bestimmte Anzahl von Pulsen erzeugt werden.

Die Veränderung der Prozessparameter im Anschluss an den eigentlichen Schweißprozess erfolgt vorzugsweise ohne Unterbrechung des Lichtbogens. Das heißt, dass nach Beendigung des eigentlichen Schweißprozesses für eine abschließende Änderung der Form des Wolframelektrodenendes, der Lichtbogen ohne eine wesentliche Unterbrechung aufrechterhalten und vor der Einleitung der Prozessparameteränderung kein erneuter Zündvorgang, wie beispielsweise durch einen Hochspannungsimpuls, durchgeführt wird.

Die für den Zündvorgang und den eigentlichen Schweißprozess mit dem abschließenden, zumindest einen Endpuls wesentlichen Prozessparameter, sind Spannung U, Strom I und Leistung P und der Zeit t. Vorzugsweise wird für eine Formänderung des Wolframelektrodenendes der Schweißstrom verändert. Der Schweißstrom wird dabei auf einen Wert eingestellt, bei dem ein Anschmelzen des Wolframelktrodenendes erfolgt.

Die für eine Veränderung der Form des Wolframelektrodenendes notwendige Veränderung der Prozessparameter erfolgt vorzugsweise auch in Abhängigkeit von Messwerten, welche aus einer Prozessüberwachung ermittelt werden. Somit wird gewährleistet, dass beispielsweise auch Abstandsänderungen zwischen dem Wolframelektrodenende und dem Werkstück detektiert und bei der Einstellung der Prozessparameter berücksichtigt werden können.

Die für die Steuerung der Prozessparameter benötigte Steuervorrichtung kann in einer Schweißstromquelle oder auch extern angeordnet sein. Über eine mit der Steuervorrichtung gekoppelte Eingabevorrichtung, können unter anderem die Parameter für die Höhe des Schweißstromes und die Zeitdauer für die negative oder positive Halbwelle eingestellt werden. Die Eingabevorrichtung kann durch eine Tastatur oder durch beliebige andere Eingabemöglichkeiten wie beispielsweise einem oder mehreren Potentiometern gebildet sein.

Zusätzlich kann die Steuervorrichtung mit einer Schnittstelle versehen sein, mit deren Hilfe die Eingabe von Prozess- und Steuerdaten über eine externe Rechnereinheit möglich ist. Die Datenübertragung zwischen einzelnen Komponenten der Schweißvorrichtung erfolgt vorzugsweise über Steuerleitungen, wobei Daten mit Hilfe eines Bussystems, zum Beispiel eines CAN-Bus oder seriell übertragen werden können.

Mit einer derartigen Steuervorrichtung ist es zudem möglich, den gesamten Schweißvorgang vom Zünden des Lichtbogens bis zum Endpuls gesteuert ablaufen zu lassen. Neben der Eingabe des Stromverlaufs ist eine Möglichkeit zur Eingabe von Kenndaten für die verwendete Wolframelektrode vorgesehen. Somit ist es möglich den Stromverlauf auch unter Berücksichtigung der verwendeten Elektrode einzustellen.

Vorzugsweise können Kenndaten wie die Zusammensetzung, Form und Durchmesser der Wolframelektrode voreingestellt werden. Da diese Informationen wesentliche Kriterien bei der Einstellung der Prozessparameter darstellen, insbesondere für das erfindungsgemäße Verfahren im Anschluss an den eigentlichen Schweißprozess. Unter Einbeziehung der Elektrodenkenndaten kann gewährleistet werden, dass am Ende des Schweißprozesses eine im Wesentlichen kugelkalottenförmige Ausbildung des Wolframelektrodenendes durch die Stromänderung erreicht wird.

Die mit der Erfindung erzielten Vorteile bestehen insbesondere darin, Zündverhalten, Nahtqualität, und Lichtbogenstabilität zu verbessern. Zusätzlich werden bei einer derartigen Lösung, dadurch dass ein Anschleifen der Wolframelektrode relativ selten notwendig wird, die Fertigungszeiten verringert, wodurch Kosten eingespart werden können.

Ein Ausführungsbeispiel der Erfindung wird anhand einer Zeichnung näher erläutert. Darin zeigen:
- Fig. 1: eine schematische Darstellung einer Schweißvor- richtung
- Fig. 2: einen Stromverlauf eines AC-WIG-Schweißprozesses
- Fig. 3: eine schematische Darstellung eines Wolframe- lektrodenendes

Gleiche Teile sind in allen Figuren mit denselben Bezugszeichen versehen.

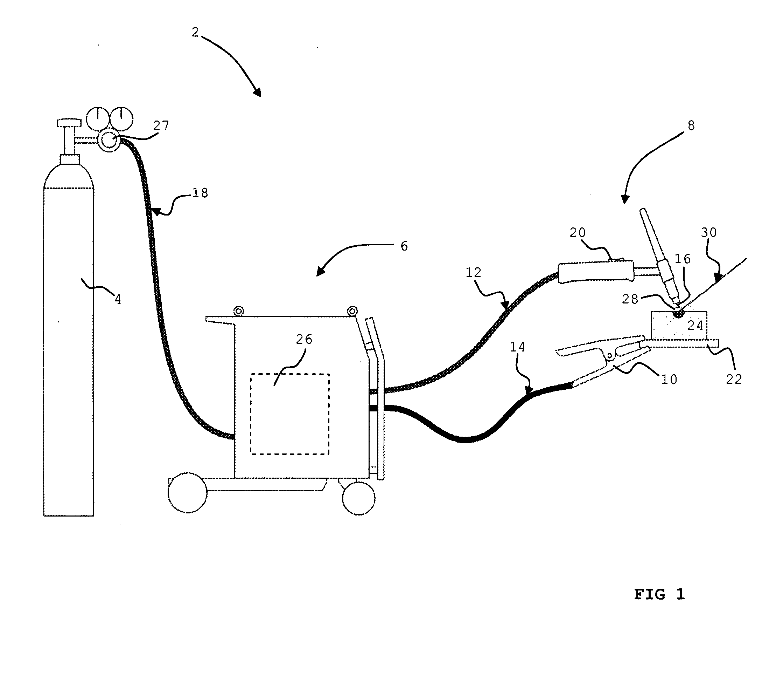

Die FIG 1 zeigt eine Vorrichtung zur Durchführung eines AC-WIG- Schweißprozesses, bestehend aus einem Schutzgasspeicher 4, einer geregelte Schweißstromquelle 6, einem Handbrenner 8 und einem Masseanschluss 10. Der Handbrenner 8 und der Masseanschluss 10 sind über Versorgungsleitungen 12, 14 mit der Schweißstromquelle 6 elektrisch verbunden, wobei die Versorgungsleitung 12 zum Hahdbrenner 8 in einem Schlauchpaket verläuft und über einen Elektrodenhalter im Brenner 8 eine Wolframelektrode 16 mit Energie versorgt. In diesem Schlauchpaket verlaufen zudem Kühlkanäle zur Kühlung des Brenners 8, eine Schutzgasleitung 18 sowie Steuerleitungen für die Steuerung der Schweißstromquelle 6 mittels Bedienelement 20 am Brenner. Am Brennerausgang befindet sich der Elektrodenhalter, welche von einer Schutzgasdüse umgeben ist und die Wolframelektrode 16 im Brenner 8 fixiert. Das zweite Versorgungskabel 14 stellt mittels Masseanschluss 10 und einer Werkstückauflage 22 eine elektrische Verbindung zwischen der Schweißstromquelle 6 und einem Werkstück 24 her.

Die Schweißstromquelle 6 weist eine hier nicht dargestellte Ein- und Ausgabevorrichtung auf, mit deren Hilfe die unterschiedlichen Parameter beziehungsweise Betriebsarten für einen Fügeprozess eingestellt werden können, wobei diese Daten an eine Steuervorrichtung 26, zur Steuerung der einzelnen Komponenten der Schweißvorrichtung 2, weitergeleitet werden. Die Schutzgaszuführung 18 erfolgt ausgehend von dem Schutzgasspeischer 4, welcher zur Druck- bzw. Durchflussregulierung mit einer Armatur 27 versehen ist, über die Schutzgasleitung 18 zum Brenner 8, wobei die Schutzgaszufuhr 18 über hier nicht dargestellte Steuerventile eingestellt werden kann. Mittels der Eingabevorrichtung werden die Daten für den Zündprozess, den eigentlichen Schweißvorgang und die Informationen für das abschließende Aufschmelzen des Wolframelektrodenendes 29 eingegeben.

Zwischen der Wolframelektrode 16 und dem Werkstück 24 wird ein Lichtbogen 28 gezündet, welcher ein Aufschmelzen des Werkstücks 24 bewirkt. Dabei wird die Schmelzzone und die Wolframelektrode 16 durch das am Brennerausgang ausströmende Schutzgas vor den Einflüssen atmosphärischer Gase geschützt. Zwischen der Wolframelektrode 16 und dem Werkstück 24 wird ein drahtförmiger Zusatzwerkstoff 30 in die Schmelzzone eingebracht. Die Führung des Schweißdrahtes 30 erfolgt bei diesem Schweißverfahren üblicherweise von Hand. Der Schweißdraht 30 kann aber auch maschinell, ähnlich wie beim MSG-Schweißen, mittels einer Drahtvorschubvorrichtung zugeführt werden, wobei die Steuerung des Drahtvorschubes über das Bedienelement 20 am Brenner 8 erfolgen kann.

Das Zünden des Lichtbogens 28 erfolgt mittels eines Hochspannungsimpulses. Gleichzeitig mit dem Zünden fließt ein voreingestellter Strom über die Versorgungsleitungen 12, 14, wobei die Leerlaufspannung der Schweißstromquelle 6 auf eine Betriebsspannung absinkt. Nach dem Zündvorgang beginnt der eigentliche Schweißprozess, bei dem, durch die eingebrachte Energie des zwischen dem Wolframelektrodenende 29 und dem Werkstück 24 aufgebauten Lichtbogens 28, das Werkstück 24 und der Zusatzwerkstoff 30 aufgeschmolzen werden.

Nach Abschluss des eigentlichen Schweißprozesses, wird die Wolframelektrode 16 über eine voreingestellte Zeitdauer mit einem Strom in Form eines Endpulses beaufschlagt, welcher eine Temperatur am Elektrodenende 29 bewirkt, bei der das Elektrodenende 29 angeschmolzen wird. Dadurch erhält das werkstückseitige Elektrodenende 29, im Anschluss an den eigentlichen Schweißprozess, eine kugelkalottenförmige Ausbildung. Dieser Vorgang wird mit einer gegenüber dem Werkstück 30 positiv gepolten Wolframelektrode 16 durchgeführt.

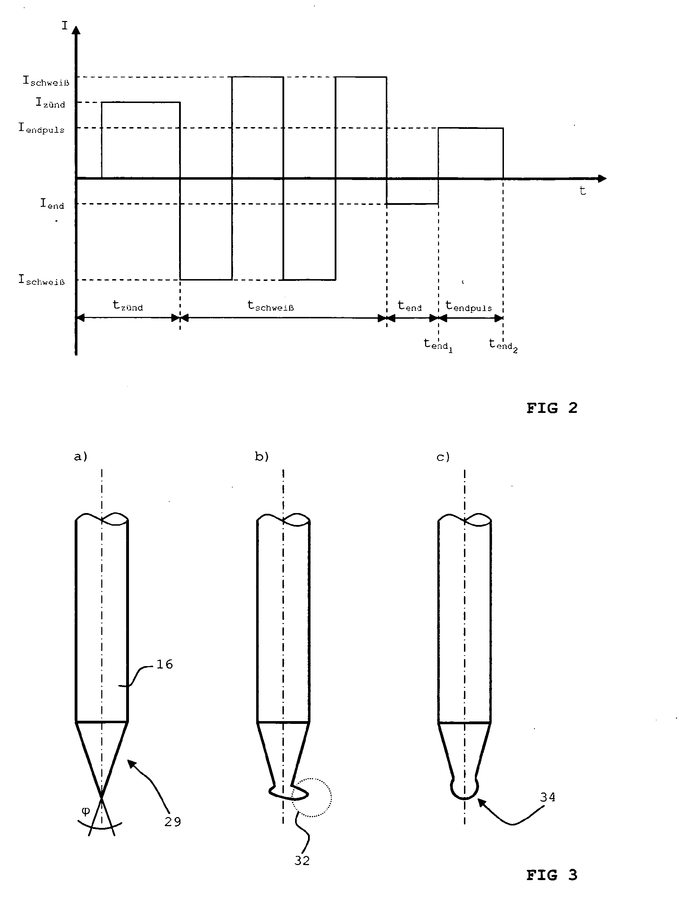

Ein möglicher Stromverlauf für einen AC-WIG-Schweißvorgang ist Fig. 2 dargestellt. In einem ersten Abschnitt t_{zünd} wird ein Lichtbogen 28 mittels eines hier nicht dargestellten Hochspannungsgenerators gezündet, indem über die Versorgungsleitung 12 der Hochspannungsimpuls zum Handbrenner 8 geleitet wird. Zu diesem Zeitpunkt liegt an den Versorgungsleitungen 12, 14 eine Leelaufspannung an und es fließt noch kein voreingestellter Strom I_{zünd}. Erst nach dem Zünden des Lichtbogens 28 fließt der voreingestellte Strom, infolge dessen die Leerlaufspannung auf eine Betriebsspannung absinkt. Nach dem Zündvorgang beginnt der eigentliche Schweißprozess mit einer negativen Halbwelle mit einem Schweißstrom I_{schweiß} bei der die Wolframelektrode 16 gegenüber dem Werkstück ein negatives Potential aufweist.

Der eigentliche Schweißprozess erfolgt für die Dauer t_{schweiß} während die Polung der Wolframelektrode periodisch wechselt. Durch den Wechselstrom I_{schweiß} kommt es zu einer alternierenden Abkühlungs- und Erwärmungphase der Wolframelektrode 16, derart, dass sich während einer negativen Halbwelle die Wolframelektrode 16, insbesondere das Elektrodenende 29 abkühlt und für die Dauer einer positiven Halbwelle wieder erwärmt. So können unter bestimmten Umständen, welche im Wesentlichen von den voreingestellten Prozessparametern abhängig sind, Verformungen am Elektrodenende 29 entstehen.

Um eine für einen erneuten Zündvorgang angestrebte Form des Elektrodenendes 29 zu erreichen, wird im Anschluss an den eigentlichen Schweißprozess, durch die Steuervorrichtung 26 für die Zeitdauer t_{end} zuerst ein Strom L_{end} generiert, welcher unterhalb des Schweißstromwertes I_{schweiß} und unterhalb des Stromwertes I_{zünd} liegt. Dabei kühlt die Elektrode 16 auf eine Temperatur ab, bei der ein möglicherweise schmelzflüssiges Wolframelektrodenende 29 erstarrt. Die Abkühlung erfolgt dabei während eines negativen Impulses. Durch die anschließende Erhöhung des Stromwertes auf I_{endpuls,} wird das Elektrodenende 29 wieder angeschmolzen und eine halbkugel- oder kugelkalottenfömige Form erzielt. Dieser abschließende Vorgang wird während einer positiv gepolten Elektrode 16 durchgeführt, um auch bei Schweißvorgängen mit einem relativ geringen Energieeintrag ein Anschmelzen des Elektrodenendes 29 zu erreichen. Selbstverständlich ist das erfindungsgemäße Verfahren nicht darauf beschränkt, dass die Elektrode 16 während der Periode t_{end} und/oder t_{endpuls} positiv gepolt ist.

In Fig. 3 unter a) bis c) sind verschiedene Wolframelektroden 16 abgebildet, wobei in Fig. 3 a) eine Elektrode 16 mit einem Elektrodenende 29 gezeigt ist, welches einer idealen Form nach einem Anschleifvorgang entspricht. Das Elektrodenende 29 weist dabei eine Spitze mit einem Anschliffwinkel ϕ auf. Während des eigentlichen Schweißvorgangs jedoch, schmilzt das Elektrodenende 29 während der positiven Halbwelle und es kann, wie in Fig. 3 b) dargestellt, zu einer seitlichen Ablagerung 32 von flüssigem Elektrodenmaterial kommen, welches durch die anschließende negative Halbwelle wieder erstarrt. Aufgrund des zyklischen Anschmelzens und wieder Erstarrens des Elektrodenendes 29 kommt es zu der in dieser Figur dargestellten unerwünschten Form, die von der Idealform stark abweicht. Mit einem solchen, durch den eigentlichen Schweißprozess charakteristisch geformten Wolframelektrodenende 29, würde ein erneuter Zündvorgang zu Beginn eines Schweißprozesses, ohne erneutes Anschleifen der Wolframelektrode 16, nur zu einem unbefriedigenden Ergebnis führen.

Ein durch den Endpuls erreichtes kugelkalottenförmiges Wolframelektrodenende 29 ist in Fig. 3 c) dargestellt. Mit einem derartig geformten Elektrodenende 29 kann ein erneutes Zünden des Lichtbogens 28 zu Beginn eines Schweißprozesses, auch ohne einen vorangehenden Anschleifvorgang, problemlos durchgeführt werden. Diese halbkugelförmige Ausbildung kann mit dem erfindungsgemäßen Verfahren natürlich auch an nicht angeschliffenen, stumpfen Elektrodenenden 29 erreicht werden.

Das Verfahren ist spezifisch auf einen Zündvorgang beim Lichtbogenfügeverfahren mit einer sich nicht verbrauchenden Elektrode 16 ausgerichtet, bei dem, durch einen sich an den eigentlichen Schweißvorgang anschließenden Vorgang, das Elektrodenende 29 durch eine Veränderung der Prozessparameter in einen schmelzflüssigen Zustand übergeht, wodurch eine im wesentlichen axialsymmetrische, kugelkalottenartige Form des Elektrodenendes 29 erreicht wird. Mit einem derartig ausgebildeten Elektrodenende 29 kann ein fehlerfreies Zünden bei einem nachfolgend eingeleiteten Schweißvorgang sichergestellt und ein Abtropfen von Elektrodenmaterial zuverlässig verhindert werden.

Insbesondere stellt dieses Verfahren sicher, dass nach einem erfolgten Schweißvorgang, bereits vor Beginn eines erneuten Schweißvorgangs, das Wolframelektrodenende 29 eine halbkugelförmige Ausbildung aufweist. Somit können ein sicheres Zünden des Lichtbogens 28 und insbesondere während des Zündprozesses ein stabiler Lichtbogen 28 erreicht werden.

### Bezugszeichenliste

- 2: Schweißvorrichtung
- 4: Schutzgasspeicher
- 6: Schweißstromquelle
- 8: Handschweißbrenner
- 10: Masseanschluss
- 12, 14: Versorgungskabel
- 16: Wolframelektrode
- 18: Schutzgasleitung
- 20: Bedienelement
- 22: Werkstückauflage
- 24: Werkstück
- 26: Steuervorrichtung
- 27: Armatur
- 28: Lichtbogen
- 29: Wolframelektrodenende
- 30: Schweißzusatzwerkstoff bzw. Schweißdraht
- 32: vom Wolframelektrodenende abstehendes Elektroden- material
- 34: Wolframelektrodenende mit einer kugelkalottenför- migen Ausbildung

## Patentansprüche

1. Verfahren zur Durchführung eines Lichtbogenfügeprozesses mit einer sich nicht verbrauchenden Elektrode (16), insbesondere zur Durchführung eines Lichtbogenschweißprozesses mit einer Wolframelektrode (16), **dadurch gekennzeichnet, dass** nach dem eigentlichen Schweißprozess, durch Veränderung der Prozessparameter auf ein lichtbogenseitiges Ende (29) der Wolframelektrode (16) formgebend eingewirkt wird, indem das Wolframelektrodenende (29) durch die Parameteränderung einen schmelzflüssigen Zustand erreicht und eine kugelkalottenförmige Ausbildung (34) des Wolframelektrodenendes (29) erzielt wird.

2. Verfahren nach Anspruch 1, bei dem die Veränderung der Prozessparameter nach einer Elektrodenabkühlphase erfolgt.

3. Verfahren nach Anspruch 1 oder 2, zur Durchführung eines AC-WIG-Schweißprozesses.

4. Verfahren nach Anspruch 1 bis 3, bei dem die Änderung der Prozessparameter im Anschluss an den eigentlichen Schweißprozess ohne eine wesentliche Unterbrechung des Lichtbogens (28) erfolgt.

5. Verfahren nach Anspruch 1 bis 4, bei dem zur Formänderung des Wolframelektrodenendes (32) der Schweißstrom verändert wird.

6. Verfahren nach Anspruch 1 bis 5, bei dem während der Elektrodenabkühlphase das Wolframelektrodenende (32) keinen schmelzflüssigen Zustand aufweist.

7. Verfahren nach Anspruch 1 bis 6, beim dem zur Formänderung des Wolframelektrodenendes (32), die Wolframelektrode (16) gegenüber dem Werkstück (24) ein positives Potential aufweist.

8. Verfahren nach Anspruch 1 bis 7, bei dem der Schweißstrom in Abhängigkeit von Messwerten, welche aus einer Prozessüberwachung ermittelt werden, verändert wird.

9. Verfahren nach Anspruch 1 bis 8, bei dem der Schweißstrom mittels einer Steuervorrichtung (26) in einer Schweißstromquelle (6) und/ oder einer externen Steuervorrichtung (26) verändert wird.

10. Verfahren nach Anspruch 1 bis 9, bei dem der Schweißstrom in Abhängigkeit von der verwendeten Wolframelektrode (16) verändert wird.

11. Verfahren nach Anspruch 10, bei dem der Schweißstrom in Abhängigkeit von der Zusammensetzung der Wolframelektrode (16) verändert wird.

12. Verfahren nach Anspruch 10 oder 11, bei dem der Scliweißstrom in Abhängigkeit von einem Durchmesser der Wolframelektrode (16) verändert wird.

13. Verfahren nach Anspruch 10 bis 12, bei dem der Schweißstrom in Abhängigkeit von einer geometrischen Form der Wolframelektrode (16) verändert wird.

14. Verfahren nach Anspruch 13, bei dem der Schweißstrom in Abhängigkeit von der geometrischen Form des Wolframelektrodenendes (32) verändert wird.

## Claims

1. A method for performing an electrical arc joining process using a non-consumable electrode (16), in particular for performing an arc welding process using a wolfram electrode (16), wherein after the actual welding process one end on the electrical arc side (29) of the wolfram electrode (16) is acted upon in a shape-giving manner by changing the process parameters by inducing the end of the wolfram electrode (29) to assume a molten state as a result of changing the parameters and achieving a spherical cup-shaped development (34) at the end of the wolfram electrode (29).

2. Method in accordance with Claim 1, where the process parameters are modified following an electrode cooling phase.

3. Method in accordance with either Claim 1 or 2 for performing a AC-WIG welding process.

4. Method in accordance with Claim 1 to 3, where the process parameters are modified after the actual welding process without a significant interruption of the electric arc (28).

5. Method in accordance with Claim 1 to 4, where the welding current is modified to alter the shape of the end of the wolfram electrode (32).

6. Method in accordance with Claim 1 to 5, where the end of the wolfram electrode (32) does not have a molten state during the electrode cooling phase.

7. Method in accordance with Claim 1 to 6, where the wolfram electrode (16) has a positive potential in relation to the workpiece (24) in order to modify the shape of the end of the wolfram electrode (32).

8. Method in accordance with Claim 1 to 7, where the welding current is modified as a function of the measured values obtained from process monitoring.

9. Method in accordance with Claim 1 to 8, where the welding current is modified by means of a control device (26) in a welding current source (6) and/ or an external control device (26).

10. Method in accordance with Claim 1 to 9, where the welding current is modified subject to the wolfram electrode (16) employed.

11. Method in accordance with Claim 10, where the welding current is modified subject to the composition of the wolfram electrode (16) employed.

12. Method in accordance with Claim 10 or 11, where the welding current is modified subject to a diameter of the wolfram electrode (16).

13. Method in accordance with Claim 10 to 12, where the welding current is modified subject to a geometric shape of the wolfram electrode (16).

14. Method in accordance with Claim 13, where the welding current is modified subject to the geometric shape of the end of the wolfram electrode (32).

## Revendications

1. Procédé pour l'exécution d'un processus d'assemblage à l'arc électrique avec une électrode non consommable (16), en particulier pour l'exécution d'un processus de soudage à l'arc électrique avec une électrode au tungstène (16), **caractérisé en ce qu'**après le processus de soudage proprement dit, la modification des paramètres de processus à une extrémité côté arc électrique (29) de l'électrode au tungstène (16) permet d'exercer un effet de formage par le fait que l'extrémité de l'électrode au tungstène (29) atteint un état de fusion liquide par la modification des paramètres et qu'une déformation en forme de calotte sphérique (34) de l'extrémité de l'électrode au tungstène (29) est obtenue.

2. Procédé selon la revendication 1, dans lequel la modification des paramètres de processus fait suite à une phase de refroidissement de l'électrode.

3. Procédé selon la revendication 1 ou 2 pour l'exécution d'un processus de soudage AC-WIG.

4. Procédé selon les revendications 1 à 3, dans lequel la modification des paramètres de processus a lieu après le processus de soudage proprement dit sans interruption notable de l'arc électrique (28).

5. Procédé selon les revendications 1 à 4, dans lequel, pour modifier la forme de l'extrémité de l'électrode au tungstène (32), le courant de soudage est modifié.

6. Procédé selon les revendications 1 à 5, dans lequel, pendant la phase de refroidissement de l'électrode, l'extrémité de l'électrode au tungstène (32) n'est pas dans un état de fusion liquide.

7. Procédé selon les revendications 1 à 6, dans lequel, pour la modification de l'extrémité de l'électrode au tungstène (32), l'électrode au tungstène (16) présente un potentiel positif par rapport à la pièce (24).

8. Procédé selon les revendications 1 à 7, dans lequel le courant de soudage est modifié en fonction de valeurs de mesure déterminées par une surveillance du processus.

9. Procédé selon les revendications 1 à 8, dans lequel le courant de soudage est modifié au moyen d'un dispositif de commande (26) dans une source de courant de soudage (6) et/ou d'un dispositif de commande (26) externe.

10. Procédé selon les revendications 1 à 9, dans lequel le courant de soudage est modifié en fonction de l'électrode au tungstène (16) utilisée.

11. Procédé selon la revendication 10, dans lequel le courant de soudage est modifié en fonction de la composition de l'électrode au tungstène (16).

12. Procédé selon la revendication 10 ou 11, dans lequel le courant de soudage est modifié en fonction d'un diamètre de l'électrode au tungstène (16).

13. Procédé selon les revendications 10 à 12, dans lequel le courant de soudage est modifié en fonction d'une forme géométrique de l'électrode au tungstène (16).

14. Procédé selon la revendication 13, dans lequel le courant de soudage est modifié en fonction de la forme géométrique de l'extrémité de l'électrode au tungstène (32).
